# EUROPEAN PATENT APPLICATION

(11) **EP 3 480 620 A1**
(43) Date of publication of application: **08.05.2019**
(21) Application number: 18201835.8
(22) Date of filing: 22.10.2018
(51) Int. Cl.: G01S 7/41

(54) **HANDS-FREE ACCESS METHOD**

(30) Priority: 02.11.2017 US 201715801532
(71) Applicant: Aptiv Technologies Limited, St. Michael (BB)
(72) Inventor: OMAN, Todd P., GREENTOWN, INDIANA 46936 (US); GREENE, Jeremy S., MCCORDSVILLE, INDIANA 46055 (US)
(74) Representative: Robert, Vincent

(57) **Abstract**

A system (10) includes a host-transceiver (14), a radar-sensor (20) or a lidar-sensor, and a controller (30). The host-transceiver (14) is installed in a host-vehicle (12) and detects a signal (16) from a mobile-transceiver (18). The radar-sensor (20) or the lidar-sensor detecting movement (22) of one or more body parts (24) of a person (26) proximate to the host-vehicle (12). The controller (30) is in communication with the host-transceiver (14) and the radar-sensor (20) or the lidar-sensor (120). The controller (30) activates the radar-sensor (20) or the lidar-sensor in accordance with a determination that the mobile-transceiver (18) is within a distance-threshold (34) of the host-vehicle (12). The controller (30) provides access (36) to the host-vehicle (12) in accordance with a determination that the movement (22) of the one or more body parts (24) corresponds to one or more predetermined gestures (38).

## Description

### TECHNICAL FIELD OF INVENTION

This disclosure generally relates to an access method, and more particularly relates to a hands-free access method.

### SUMMARY OF THE INVENTION

According to the invention, a hands-free access system comprises a host transceiver in a host-vehicle, the host-transceiver detecting a signal from a mobile-transceiver; a radar-sensor or a lidar-sensor, the radar-sensor or the lidar sensor detecting movement of one or more body parts of a person proximate to the host-vehicle; and
a controller in communication with the host-transceiver and the radar-sensor or the lidar sensor, the controller activating the radar-sensor in accordance with a determination that the mobile-transceiver is within a distance-threshold of the host-vehicle, and the controller providing access to the host-vehicle in accordance with a determination that the movement of the one or more body parts corresponds to one or more predetermined gestures.

Each of the one or more predetermined gestures may correspond to at least one unique host-vehicle access-command. The system may further determines a location of the mobile-transceiver with respect to the host-vehicle, the host-vehicle comprising a front-end, a rear-end, and two sides, at least one of the two sides comprising one or more doors. The location may be the rear-end of the host-vehicle, and the controller further provides access to a trunk of the host-vehicle in accordance with the determination that the radar-sensor or the lidar-sensor detects one of the one or more predetermined gestures. The location may be one of the two sides of the host-vehicle, and the controller may further provides access to the one or more doors of the host-vehicle in accordance with the determination that the radar-sensor or the lidar-sensor detects one of the one or more predetermined gestures. The mobile-transceiver may be detected by the host-transceiver at a distance of at least two meters from the host-vehicle. The radar-sensor or the lidar-sensor detects the one or more predetermined gestures at a distance of greater than five centimeters from the host-vehicle. The one or more predetermined gestures may include a movement of at least a part of a human body. The one or more predetermined gestures may be user-configurable.

According to the invention, a method of hands free access comprises:
detecting, by a host-transceiver in a host-vehicle, a signal from a mobile-transceiver within a distance-threshold;
in accordance with a determination that the mobile-transceiver is within the distance-threshold, activating, by a controller, a radar-sensor or a lidar-sensor, the radar-sensor or the lidar-sensor movement of one or more body parts of a person; and
in accordance with a determination, by the controller, that the movement of the one or more body parts corresponds to one or more predetermined gestures, providing access to the host-vehicle.

Each of the one or more predetermined gestures may correspond to at least one unique host-vehicle access-command. The host-transceiver may further determine a location of the mobile-transceiver with respect to the host-vehicle, the host-vehicle comprising a front-end, a rear-end, and two sides, at least one of the two sides comprising one or more doors. The location may be the rear-end of the host-vehicle, and the controller may further provide access to a trunk of the host-vehicle in accordance with the determination that the radar-sensor or the lidar-sensor may detect one of the one or more predetermined gestures. The location may be one of the two sides of the host-vehicle, and the controller may further provide access to the one or more doors of the host-vehicle in accordance with the determination that the radar-sensor or the lidar-sensor detects one of the one or more predetermined gestures. The mobile-transceiver may be detected by the host-transceiver at a distance of at least two meters from the host-vehicle. The radar-sensor or the lidar-sensor may detect the one or more predetermined gestures at a distance of greater than five centimeters from the host-vehicle. The one or more predetermined gestures may include a movement of at least a part of a human body. The one or more predetermined gestures may be user-configurable.

### BRIEF DESCRIPTION OF DRAWINGS

The present invention will now be described, by way of example with reference to the accompanying drawings, in which:
Fig. 1 is an illustration of a hands-free access system in accordance with one embodiment;
Fig. 2 is an illustration of a host-vehicle equipped with the hands-free access system of Fig. 1 in accordance with one embodiment;
Fig. 3 is an illustration of the host-vehicle equipped with the hands-free access system of Fig. 1 in accordance with one embodiment;
Fig. 4 is a method of operating a hands-free access system in accordance with another embodiment;
Fig. 5 is an illustration of a hands-free access system in accordance with yet another embodiment;
Fig. 6 is an illustration of a host-vehicle equipped with the hands-free access system of Fig. 5 in accordance with yet another embodiment;
Fig. 7 is an illustration of the host-vehicle equipped with the hands-free access system of Fig. 5 in accordance with yet another embodiment; and
Fig. 8 is a method of operating a hands-free access system in accordance with yet another embodiment.

### DETAILED DESCRIPTION

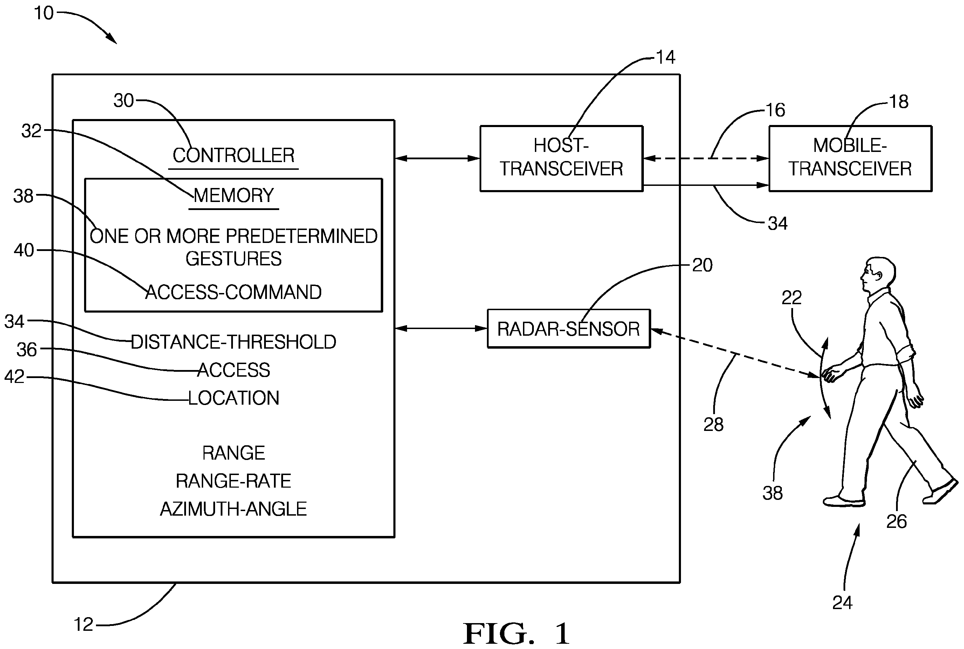

Fig. 1 illustrates a non-limiting example of a hands-free access system 10, hereafter referred to as the system 10, installed in a host-vehicle 12. The system 10 includes a host-transceiver 14. The host-transceiver 14 is any of the known passive entry devices, typically used in automotive applications and typically referred to as Passive Entry (PE) or Passive Entry/Passive Start (PEPS) devices, such as the PEPS system available from Atmel Corporation of San Jose, California, U.S.A. The host-transceiver 14 detects a signal 16 from a mobile-transceiver 18 (e.g. a key fob, smart phone, etc.) that is paired to the host-transceiver 14 through the respective wireless communication protocols associated with the passive entry device, as will be understood by those skilled in the art. The passive entry device includes a plurality of antennae (not shown) installed on the host-vehicle 12 that receive the signal 16 from the mobile-transceiver 18. The mobile-transceiver 18 is typically detected by the host-transceiver 14 at a distance of at least two meters (2 m) from the host-vehicle 12 to enable a system-activation-time of about one second (1 s), as will be described in more detail below.

The system 10 also includes a radar-sensor 20 that detects movement 22 of one or more body parts 24 of a person 26 proximate to the host-vehicle 12. Typically, radar-systems on vehicles are capable of only determining a range (not shown) and azimuth-angle (e.g. left/right angle, not shown) to a target (e.g. the person 26) so may be referred to as a two-dimensional (2D) radar-system. Other radar-systems are capable of determining an elevation-angle (not shown) to the target so may be referred to as a three-dimensional (3D) radar-system. In the non-limiting example illustrated in Fig. 1, the radar-sensor 20 is a 2D radar-sensor 20. A radar-sensor-system with a similarly configured radar-sensor 20 is available from Delphi Inc. of Troy, Michigan, USA and marketed as an Electronically Scanning Radar (ESR), Short Range Radar (SRR), or a Rear-Side-Detection-System (RSDS). It is contemplated that the teachings presented herein are applicable to both 2D radar-systems and 3-D radar-systems with one or more sensor devices, i.e. multiple instances of the radar-sensor 20. The radar-sensor 20 is generally configured to detect the reflection of a radar-signal 28 that may include data indicative of the detected target proximate to the host-vehicle 12. As used herein, the detected target is the one or more body parts 24 of the person 26 (or an extension of the one or more body parts 24, such as a package or a bag) that is detected by the radar-sensor 20 and tracked by a controller 30, as will be described below.

By way of example and not limitation, the radar-sensor 20 may be configured to output a continuous or periodic data stream that includes a variety of signal characteristics associated with each target detected. The signal characteristics may include or be indicative of, but are not limited to, the range to the target from the host-vehicle 12, the azimuth-angle to the target relative to a host-vehicle-longitudinal-axis (not shown), an amplitude (not shown) of the radar-signal 28 detected by the radar-sensor 20, and a relative-velocity of closure (i.e. a range-rate, not shown) relative to the target.

The system 10 also includes the controller 30 in communication with the host-transceiver 14 and the radar-sensor 20. The controller 30 may include a processor (not shown) such as a microprocessor or other control circuitry such as analog and/or digital control circuitry including an application specific integrated circuit (ASIC) for processing data as should be evident to those in the art. The controller 30 may include a memory 32, including non-volatile memory, such as electrically erasable programmable read-only memory (EEPROM) for storing one or more routines, thresholds, and captured data. The one or more routines may be executed by the processor to perform steps for determining if the detected movement 22 of the one or more body parts 24 are recognized based on signals received by the controller 30 from the radar-sensor 20 as described herein.

The controller 30 may analyze the radar-signal 28 to categorize the data from each detected target with respect to a list of previously detected targets having established tracks. As used herein, a track refers to one or more data sets that have been associated with a particular one of the detected targets. By way of example and not limitation, if the amplitude of the radar-signal 28 is above a predetermined amplitude threshold, then the controller 30 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view of the radar-sensor 20.

The controller 30 activates the radar-sensor 20 in accordance with a determination that the mobile-transceiver 18 is within a distance-threshold 34 of the host-vehicle 12. That is, the controller 30 "wakes-up" the radar-sensor 20, that may have been deactivated to conserve the host-vehicle 12 battery power, when the mobile-transceiver 18 is detected. The distance-threshold 34 of at least 2 m, as previously mentioned, would enable the system-activation-time of about 1 s, for the person 26 in possession of the mobile-transceiver 18 that is approaching the host-vehicle 12 at a typical walking-speed of 1.5 m/s. The distance-threshold 34 may extend to a maximum detectable range of the passive entry subsystem.

The controller 30 provides access 36 to the host-vehicle 12 in accordance with a determination that the movement 22 of the one or more body parts 24 corresponds to one or more predetermined gestures 38. The one or more predetermined gestures 38 include a start-and-stop sequence of movement 22 of at least a part of a human body, such as a hand, a foot, a leg, a knee, an elbow, a hip, a shoulder, a head, etc., and may also include a movement 22 of an extension of at least a part of the human body, such as a brief case held in the hand, a box held in both hands, or a baby stroller or shopping cart pushed by the person 26. The radar-sensor 20 tracks the start-and-stop sequence of movement 22 and the controller 30 determines whether the start-and-stop sequence of movement 22 corresponds to (i.e. matches) the predetermined gesture 38 stored in the memory 32. The one or more predetermined gestures 38 stored in the memory 32 of the controller 30 may correspond to at least one unique host-vehicle 12 access-command 40. The access-command 40 defines the type of access 36 to the host-vehicle 12 as commanded by the person 26. For example, moving the hand toward the sky may be the command to unlock the door of the host-vehicle 12, while moving the hand toward the ground may be the command to lock the door. The radar-sensor 20 detects the one or more predetermined gestures 38 at the distance of greater than 5 cm from the host-vehicle 12 and up to the maximum range of the radar-sensor 20, which may exceed 80 m.

The one or more predetermined gestures 38 may be user-configurable. That is, the user may determine their own unique predetermined gesture 38 to allow a particular type of access 36 to the host-vehicle 12, and may store the unique predetermined gesture 38 in the memory 32 of the controller 30. The user-configurable feature is beneficial because it enables the user to customize the access 36 to meet the user's own particular personal needs. For example, a disabled-person may not be capable gesturing in the same way as a non-disabled-person, and may be disadvantaged by an access system that uses a factory-installed-gesture. Similarly, an elderly-person that may not have the same sense of balance as a youthful-person and may be disadvantaged by the access system that uses the factory-installed-gesture that requires balancing on one foot.

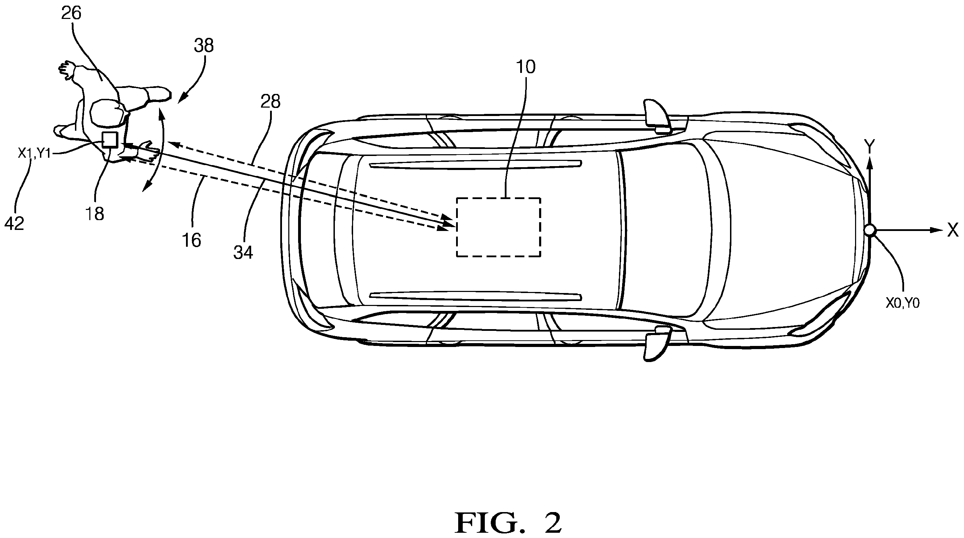

Fig. 2 illustrates the host-vehicle 12 equipped with the system 10 and the host-vehicle 12 includes a rear-end, a front-end, and two sides, at least one of the two sides including one or more doors. The person 26 is in possession of the mobile-transceiver 18 proximate to the rear-end of the host-vehicle 12. The system 10 further determines a location 42 of the mobile-transceiver 18 with respect to the host-vehicle 12 by determining the distances from the mobile-transceiver 18 to the plurality of antennae of the passive entry device, as will be understood by those in the art of passive entry devices. In the particular example illustrated in Fig. 2, the controller 30 further provides the person 26 access 36 to the trunk of the host-vehicle 12 in accordance with the determination that the radar-sensor 20 detects one of the one or more predetermined gestures 38, which is illustrated as a vertical-movement of the hand.

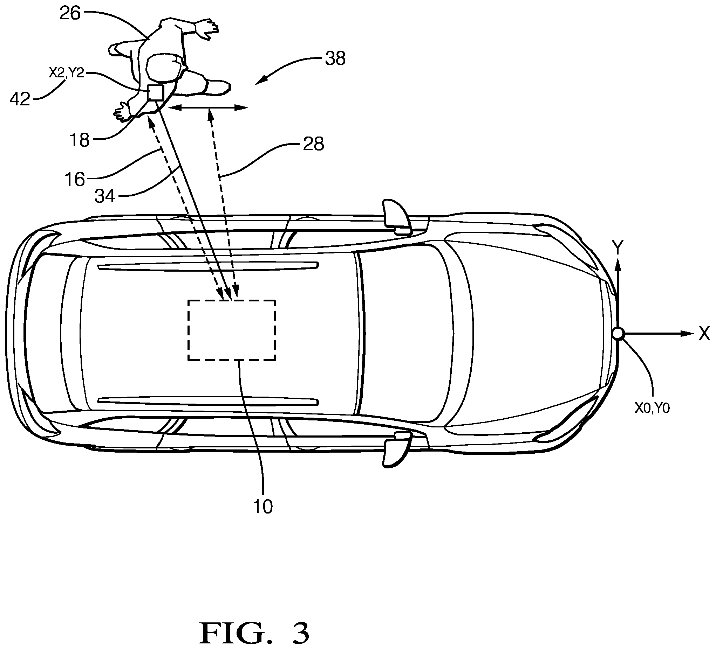

Fig. 3 illustrates the host-vehicle 12 equipped with the system 10 and the person 26 is in possession of the mobile-transceiver 18 proximate to one of the two sides of the host-vehicle 12 (i.e. a left-side of the host-vehicle 12). In the particular example illustrated in Fig. 3, the controller 30 further provides access 36 to the one or more doors of the host-vehicle 12 (i.e. the left-side door) in accordance with the determination that the radar-sensor 20 detects one of the one or more predetermined gestures 38, which is illustrated as a horizontal-movement of the foot.

The user may configure the system 10 to allow access 36 to the host-vehicle 12 using the same predetermined gesture 38 for all access-commands 40 based only on the location 42 of the mobile-transceiver 18 relative to the host-vehicle 12. For example, the vertical-movement of the hand can be performed at the rear-end of the host-vehicle 12 to open the trunk, and can be performed at the side of the host-vehicle 12 to unlock the door. Alternatively, the user may configure the system 10 to allow access 36 to the host-vehicle 12 using a different predetermined gesture 38 for different access-commands 40 at any location 42 relative to the host-vehicle 12. For example, the vertical-movement of the hand can be performed at any location 42 to unlock a driver's-side door, while the horizontal-movement of the foot can be performed at any location 42 to open the trunk.

Additionally, the person 26 performing the predetermined gesture 38 need not be in possession of the mobile-transceiver 18 to gain access 36 as long as the mobile-transceiver 18 is detected within the distance-threshold 34 of the host-vehicle 12. That is, another-person (not shown) may perform the predetermined gesture 38 to gain access 36 when the mobile-transceiver 18 is detected within the distance-threshold 34 of the host-vehicle 12.

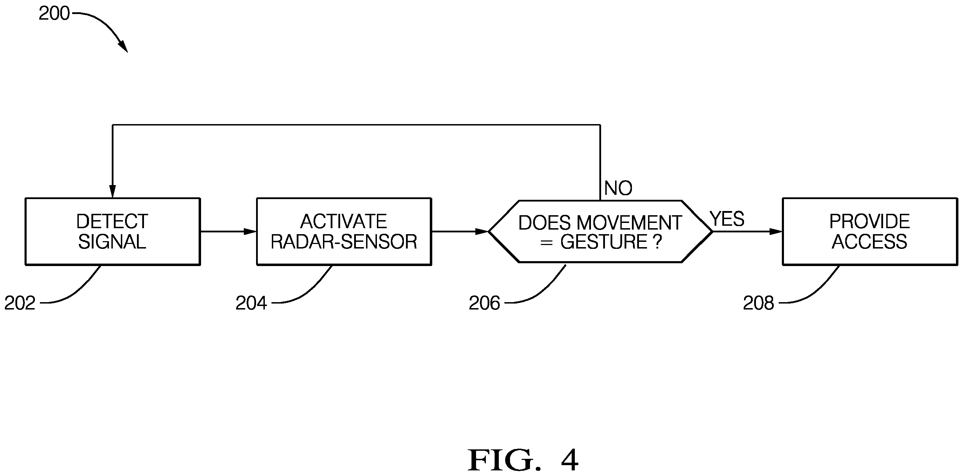

Fig. 4 illustrates another embodiment of a method 200 of hands-free access 36.

Step 202, DETECT SIGNAL, includes detecting, by a host-transceiver 14 in a host-vehicle 12, a signal 16 from a mobile-transceiver 18 within a distance-threshold 34.

Fig. 1 illustrates a non-limiting example of a hands-free access system 10, hereafter referred to as the system 10, installed in a host-vehicle 12. The system 10 includes a host-transceiver 14. The host-transceiver 14 is any of the known passive entry devices, typically used in automotive applications and typically referred to as Passive Entry (PE) or Passive Entry/Passive Start (PEPS) devices, such as the PEPS system available from Atmel Corporation of San Jose, California, U.S.A. The host-transceiver 14 detects the signal 16 from the mobile-transceiver 18 (e.g. a key fob, smart phone, etc.) that is paired to the host-transceiver 14 through the respective wireless communication protocols associated with the passive entry device, as will be understood by those skilled in the art. The passive entry device includes a plurality of antennae (not shown) installed on the host-vehicle 12 that receive the signal 16 from the mobile-transceiver 18. The mobile-transceiver 18 is typically detected by the host-transceiver 14 at a distance of at least two meters (2 m) from the host-vehicle 12 to enable a system-activation-time of about one second (1 s), as will be described in more detail below.

Step 204, ACTIVATE RADAR-SENSOR, includes activating, by a controller 30, a radar-sensor 20. The system 10 also includes the radar-sensor 20 that detects movement 22 of one or more body parts 24 of a person 26 proximate to the host-vehicle 12. Typically, radar-systems on vehicles are capable of only determining a range (not shown) and azimuth-angle (e.g. left/right angle, not shown) to a target (e.g. the person 26) so may be referred to as a two-dimensional (2D) radar-system. Other radar-systems are capable of determining an elevation-angle (not shown) to the target so may be referred to as a three-dimensional (3D) radar-system. In the non-limiting example illustrated in Fig. 1, the radar-sensor 20 is a 2D radar-sensor 20. A radar-sensor-system with a similarly configured radar-sensor 20 is available from Delphi Inc. of Troy, Michigan, USA and marketed as an Electronically Scanning Radar (ESR), Short Range Radar (SRR), or a Rear-Side-Detection-System (RSDS). It is contemplated that the teachings presented herein are applicable to both 2D radar-systems and 3-D radar-systems with one or more sensor devices, i.e. multiple instances of the radar-sensor 20. The radar-sensor 20 is generally configured to detect the reflection of a radar-signal 28 that may include data indicative of the detected target proximate to the host-vehicle 12. As used herein, the detected target is the one or more body parts 24 of the person 26 (or an extension of the one or more body parts 24, such as a package or a bag) that is detected by the radar-sensor 20 and tracked by the controller 30, as will be described below.

By way of example and not limitation, the radar-sensor 20 may be configured to output a continuous or periodic data stream that includes a variety of signal characteristics associated with each target detected. The signal characteristics may include or be indicative of, but are not limited to, the range to the target from the host-vehicle 12, the azimuth-angle to the target relative to a host-vehicle-longitudinal-axis (not shown), an amplitude (not shown) of the radar-signal 28 detected by the radar-sensor 20, and a relative-velocity of closure (i.e. a range-rate, not shown) relative to the target.

The system 10 also includes the controller 30 in communication with the host-transceiver 14 and the radar-sensor 20. The controller 30 may include a processor (not shown) such as a microprocessor or other control circuitry such as analog and/or digital control circuitry including an application specific integrated circuit (ASIC) for processing data as should be evident to those in the art. The controller 30 may include a memory 32, including non-volatile memory, such as electrically erasable programmable read-only memory (EEPROM) for storing one or more routines, thresholds, and captured data. The one or more routines may be executed by the processor to perform steps for determining if the detected movement 22 of the one or more body parts 24 are recognized based on signals received by the controller 30 from the radar-sensor 20 as described herein.

The controller 30 may analyze the radar-signal 28 to categorize the data from each detected target with respect to a list of previously detected targets having established tracks. As used herein, a track refers to one or more data sets that have been associated with a particular one of the detected targets. By way of example and not limitation, if the amplitude of the radar-signal 28 is above a predetermined amplitude threshold, then the controller 30 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view of the radar-sensor 20.

The controller 30 activates the radar-sensor 20 in accordance with a determination that the mobile-transceiver 18 is within a distance-threshold 34 of the host-vehicle 12. That is, the controller 30 "wakes-up" the radar-sensor 20, that may have been deactivated to conserve the host-vehicle 12 battery power, when the mobile-transceiver 18 is detected. The distance-threshold 34 of at least 2 m, as previously mentioned, would enable the system-activation-time of about 1 s, for the person 26 in possession of the mobile-transceiver 18 that is approaching the host-vehicle 12 at a typical walking-speed of 1.5 m/s. The distance-threshold 34 may extend to a maximum detectable range of the passive entry subsystem.

Step 206, DETERMINE MOVEMENT, includes determining, by the controller 30, that the movement 22 of the one or more body parts 24 corresponds to one or more predetermined gestures 38. The one or more predetermined gestures 38 include a start-and-stop sequence of movement 22 of at least a part of a human body, such as a hand, a foot, a leg, a knee, an elbow, a hip, a shoulder, a head, etc., and may also include the movement 22 of an extension of at least a part of the human body, such as a brief case held in the hand, a box held in both hands, or a baby stroller or shopping cart pushed by the person 26. The radar-sensor 20 tracks the start-and-stop sequence of movement 22 and the controller 30 determines whether the start-and-stop sequence of movement 22 corresponds to (i.e. matches) the predetermined gesture 38 stored in the memory 32. The one or more predetermined gestures 38 stored in the memory 32 of the controller 30 may correspond to at least one unique host-vehicle 12 access-command 40. The access-command 40 defines the type of access 36 to the host-vehicle 12 as commanded by the person 26. For example, moving the hand toward the sky may be the command to unlock the door of the host-vehicle 12, while moving the hand toward the ground may be the command to lock the door. The radar-sensor 20 may detect the one or more predetermined gestures 38 at the distance of greater than 5 cm from the host-vehicle 12 and up to the maximum range of the radar-sensor 20, which may exceed 80 m.

The one or more predetermined gestures 38 may be user-configurable. That is, the user may determine their own unique one or more predetermined gestures 38 to allow a particular type of access 36 to the host-vehicle 12, and may store the unique one or more predetermined gestures 38 in the memory 32 of the controller 30. The user-configurable feature is beneficial because it enables the user to customize the access 36 to meet the user's own particular personal needs. For example, a disabled-person may not be capable gesturing in the same way as a non-disabled person, and may be disadvantaged by an access system that uses a factory-installed-gesture. Similarly, an elderly-person that may not have the same sense of balance as a youthful-person may be disadvantaged by the access system that uses the factory-installed-gesture that requires balancing on one foot.

Step 208, PROVIDE ACCESS, includes providing, by the controller 30, access 36 to the host-vehicle 12. The controller 30 provides access 36 to the host-vehicle 12 in accordance with the determination that the movement 22 of the one or more body parts 24 corresponds to one or more predetermined gestures 38.

Fig. 2 illustrates the host-vehicle 12 equipped with the system 10 and the host-vehicle 12 includes a rear-end, a front-end, and two sides, at least one of the two sides including one or more doors. The person 26 is in possession of the mobile-transceiver 18 proximate to the rear-end of the host-vehicle 12. The system 10 further determines a location 42 of the mobile-transceiver 18 with respect to the host-vehicle 12 by determining the distances from the mobile-transceiver 18 to the plurality of antennae of the passive entry device, as will be understood by those in the art of passive entry devices. In the particular example illustrated in Fig. 2, the controller 30 further provides the person 26 access 36 to the trunk of the host-vehicle 12 in accordance with the determination that the radar-sensor 20 detects one of the one or more predetermined gestures 38, which is illustrated as a vertical-movement of the hand.

Fig. 3 illustrates the host-vehicle 12 equipped with the system 10 and the person 26 is in possession of the mobile-transceiver 18 proximate to one of the two sides of the host-vehicle 12 (i.e. a left-side of the host-vehicle 12). In the particular example illustrated in Fig. 3, the controller 30 further provides access 36 to the one or more doors of the host-vehicle 12 (i.e. the left-side door) in accordance with the determination that the radar-sensor 20 detects one of the one or more predetermined gestures 38, which is illustrated as a horizontal-movement of the foot.

The user may configure the system 10 to allow access 36 to the host-vehicle 12 using the same predetermined gesture 38 for all access-commands 40 based only on the location 42 of the mobile-transceiver 18 relative to the host-vehicle 12. For example, the vertical-movement of the hand can be performed at the rear-end of the host-vehicle 12 to open the trunk, and can be performed at the side of the host-vehicle 12 to unlock the door. Alternatively, the user may configure the system 10 to allow access 36 to the host-vehicle 12 using a different predetermined gesture 38 for different access-commands 40 at any location 42 relative to the host-vehicle 12. For example, the vertical-movement of the hand can be performed at any location 42 to unlock a driver's-side door, while the horizontal-movement of the foot can be performed at any location 42 to open the trunk.

Additionally, the person 26 performing the predetermined gesture 38 need not be in possession of the mobile-transceiver 18 to gain access 36 as long as the mobile-transceiver 18 is detected within the distance-threshold 34 of the host-vehicle 12. That is, another-person (not shown) may perform the predetermined gesture 38 to gain access 36 when the mobile-transceiver 18 is detected within the distance-threshold 34 of the host-vehicle 12.

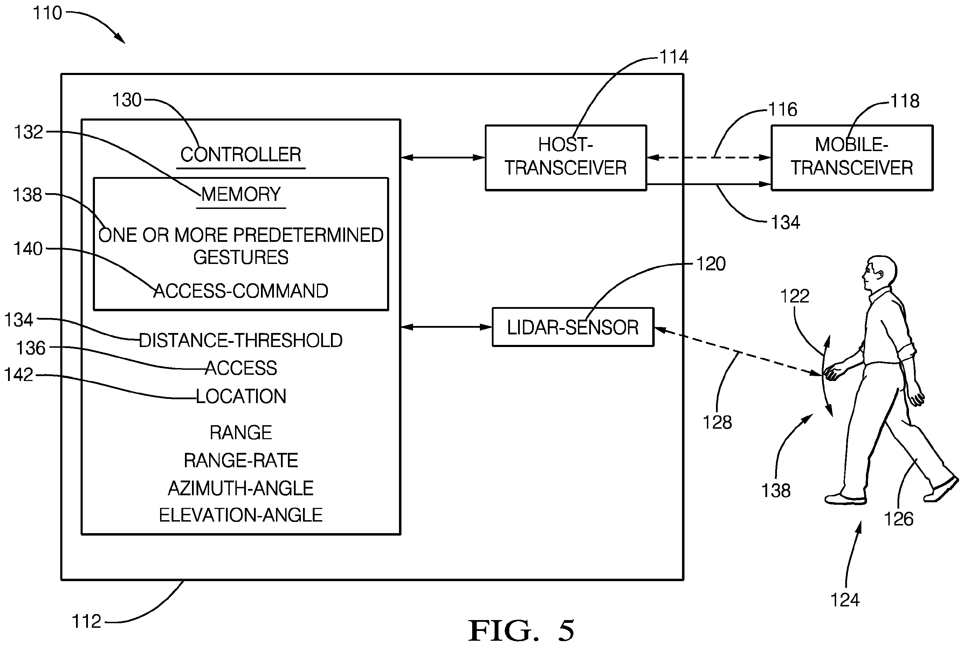

Fig. 5 illustrates a non-limiting example of a hands-free access system 110, hereafter referred to as the system 110, installed in a host-vehicle 112. The system 110 includes a host-transceiver 114. The host-transceiver 114 is any of the known passive entry devices, typically used in automotive applications and typically referred to as Passive Entry (PE) or Passive Entry/Passive Start (PEPS) devices, such as the PEPS system available from Atmel Corporation of San Jose, California, U.S.A. The host-transceiver 114 detects a signal 116 from a mobile-transceiver 118 (e.g. a key fob, smart phone, etc.) that is paired to the host-transceiver 114 through the respective wireless communication protocols associated with the passive entry device, as will be understood by those skilled in the art. The passive entry device includes a plurality of antennae (not shown) installed on the host-vehicle 112 that receive the signal 116 from the mobile-transceiver 118. The mobile-transceiver 118 is typically detected by the host-transceiver 114 at a distance of at least two meters (2 m) from the host-vehicle 112 to enable a system-activation-time of about one second (1 s), as will be described in more detail below.

The system 110 also includes a lidar-sensor 120 that detects movement 122 of one or more body parts 124 of a person 126 proximate to the host-vehicle 112. The lidar-sensor 120 is generally configured to detect the reflection of a lidar-signal 128 that may include data indicative of the detected target proximate to the host-vehicle 112. As used herein, the detected target is the one or more body parts 124 of the person 126 (or an extension of the one or more body parts 124, such as a package or a bag) that is detected by the lidar-sensor 120 and tracked by a controller 130, as will be described below.

By way of example and not limitation, the lidar-sensor 120 may be configured to output a continuous or periodic data stream that includes a variety of signal characteristics associated with each target detected. The signal characteristics may include or be indicative of, but are not limited to, the range to the target from the host-vehicle 12, the azimuth-angle to the target relative to a host-vehicle-longitudinal-axis (not shown), an elevation-angle to the target (not shown), an amplitude (not shown) of the lidar-signal 128 detected by the lidar-sensor 120, and a relative-velocity of closure (i.e. a range-rate, not shown) relative to the target.

The system 110 also includes the controller 130 in communication with the host-transceiver 114 and the lidar-sensor 120. The controller 130 may include a processor (not shown) such as a microprocessor or other control circuitry such as analog and/or digital control circuitry including an application specific integrated circuit (ASIC) for processing data as should be evident to those in the art. The controller 130 may include a memory 132, including non-volatile memory, such as electrically erasable programmable read-only memory (EEPROM) for storing one or more routines, thresholds, and captured data. The one or more routines may be executed by the processor to perform steps for determining if the detected movement 122 of the one or more body parts 124 are recognized based on signals received by the controller 130 from the lidar-sensor 120 as described herein.

The controller 130 may analyze the lidar-signal 128 to categorize the data from each detected target with respect to a list of previously detected targets having established tracks. As used herein, a track refers to one or more data sets that have been associated with a particular one of the detected targets. By way of example and not limitation, if the amplitude of the lidar-signal 128 is above a predetermined amplitude threshold, then the controller 130 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view of the lidar-sensor 120.

The controller 130 activates the lidar-sensor 120 in accordance with a determination that the mobile-transceiver 118 is within a distance-threshold 134 of the host-vehicle 112. That is, the controller 130 "wakes-up" the lidar-sensor 120, that may have been deactivated to conserve the host-vehicle 112 battery power, when the mobile-transceiver 118 is detected. The distance-threshold 134 of at least 2 m, as previously mentioned, would enable the system-activation-time of about 1 s, for the person 126 in possession of the mobile-transceiver 118 that is approaching the host-vehicle 112 at a typical walking-speed of 1.5 m/s. The distance-threshold 134 may extend to a maximum detectable range of the passive entry subsystem.

The controller 130 provides access 136 to the host-vehicle 112 in accordance with a determination that the movement 122 of the one or more body parts 124 corresponds to one or more predetermined gestures 138. The one or more predetermined gestures 138 include a start-and-stop sequence of movement 122 of at least a part of a human body, such as a hand, a foot, a leg, a knee, an elbow, a hip, a shoulder, a head, etc., and may also include the movement 122 of an extension of at least a part of the human body, such as a brief case held in the hand, a box held in both hands, or a baby stroller or shopping cart pushed by the person 126. The lidar-sensor 120 tracks the start-and-stop sequence of movement 22 and the controller 130 determines whether the start-and-stop sequence of movement 122 corresponds to (i.e. matches) the predetermined gesture 138 stored in the memory 132. The one or more predetermined gestures 138 stored in the memory 132 of the controller 130 may correspond to at least one unique host-vehicle 112 access-command 140. The access-command 140 defines the type of access 136 to the host-vehicle 112 as commanded by the person 126. For example, moving the hand toward the sky may be the command to unlock the door of the host-vehicle 112, while moving the hand toward the ground may be the command to lock the door. The lidar-sensor 120 detects the one or more predetermined gestures 138 at the distance of greater than 5 cm from the host-vehicle 112 and up to the maximum range of the lidar-sensor 120, which may exceed 80 m.

The one or more predetermined gestures 138 may be user-configurable. That is, the user may determine their own unique predetermined gesture 138 to allow a particular type of access 136 to the host-vehicle 112, and may store the unique predetermined gesture 138 in the memory 132 of the controller 130. The user-configurable feature is beneficial because it enables the user to customize the access 136 to meet the user's own particular personal needs. For example, a disabled-person may not be capable gesturing in the same way as a non-disabled-person, and may be disadvantaged by an access system that uses a factory-installed-gesture. Similarly, an elderly-person that may not have the same sense of balance as a youthful-person and may be disadvantaged by the access system that uses the factory-installed-gesture that requires balancing on one foot.

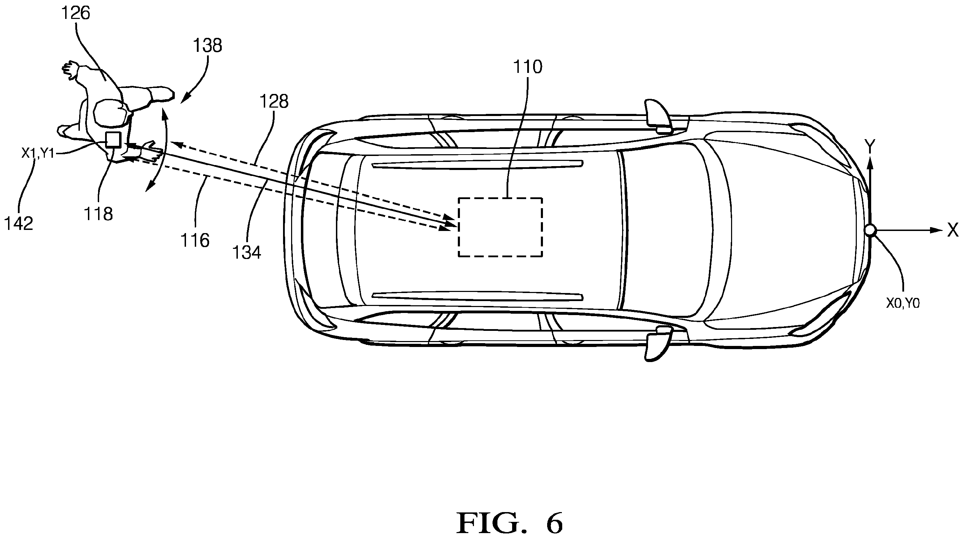

Fig. 6 illustrates the host-vehicle 112 equipped with the system 110 and the host-vehicle 112 includes a rear-end, a front-end, and two sides, at least one of the two sides including one or more doors. The person 126 is in possession of the mobile-transceiver 118 proximate to the rear-end of the host-vehicle 112. The system 110 further determines a location 142 of the mobile-transceiver 118 with respect to the host-vehicle 112 by determining the distances from the mobile-transceiver 118 to the plurality of antennae of the passive entry device, as will be understood by those in the art of passive entry devices. In the particular example illustrated in Fig. 6, the controller 130 further provides the person 126 access 136 to the trunk of the host-vehicle 112 in accordance with the determination that the lidar-sensor 120 detects one of the one or more predetermined gestures 138, which is illustrated as a vertical-movement of the hand.

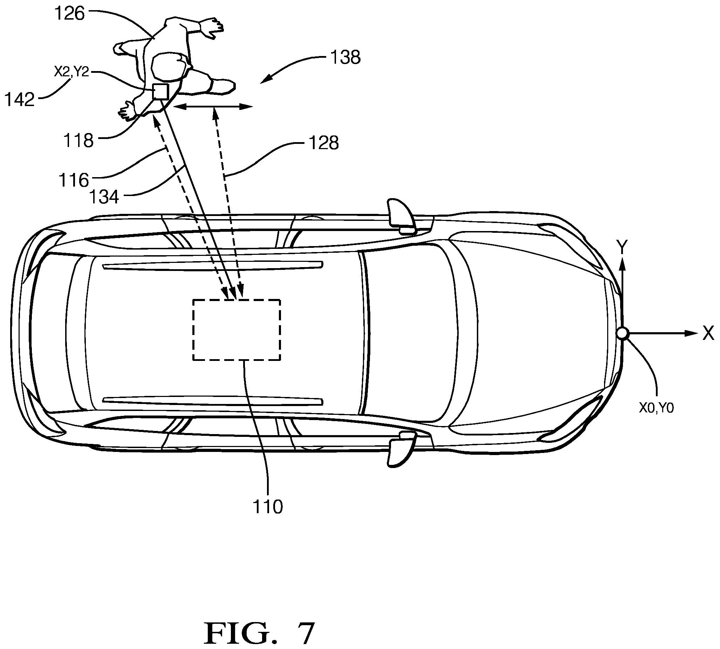

Fig. 7 illustrates the host-vehicle 112 equipped with the system 110 and the person 126 is in possession of the mobile-transceiver 118 proximate to one of the two sides of the host-vehicle 112 (i.e. a left-side of the host-vehicle 112). In the particular example illustrated in Fig. 7, the controller 130 further provides access 136 to the one or more doors of the host-vehicle 112 (i.e. the left-side door) in accordance with the determination that the lidar-sensor 120 detects one of the one or more predetermined gestures 138, which is illustrated as a horizontal-movement of the foot.

The user may configure the system 110 to allow access 136 to the host-vehicle 112 using the same predetermined gesture 138 for all access-commands 140 based only on the location 142 of the mobile-transceiver 118 relative to the host-vehicle 112. For example, the vertical-movement of the hand can be performed at the rear-end of the host-vehicle 112 to open the trunk, and can be performed at the side of the host-vehicle 12 to unlock the door. Alternatively, the user may configure the system 110 to allow access 136 to the host-vehicle 112 using a different predetermined gesture 138 for different access-commands 140 at any location 142 relative to the host-vehicle 112. For example, the vertical-movement of the hand can be performed at any location 142 to unlock a driver's-side door, while the horizontal-movement of the foot can be performed at any location 142 to open the trunk.

Additionally, the person 126 performing the predetermined gesture 138 need not be in possession of the mobile-transceiver 118 to gain access 136 as long as the mobile-transceiver 118 is detected within the distance-threshold 134 of the host-vehicle 112. That is, another-person (not shown) may perform the predetermined gesture 138 to gain access 136 when the mobile-transceiver 118 is detected within the distance-threshold 134 of the host-vehicle 112.

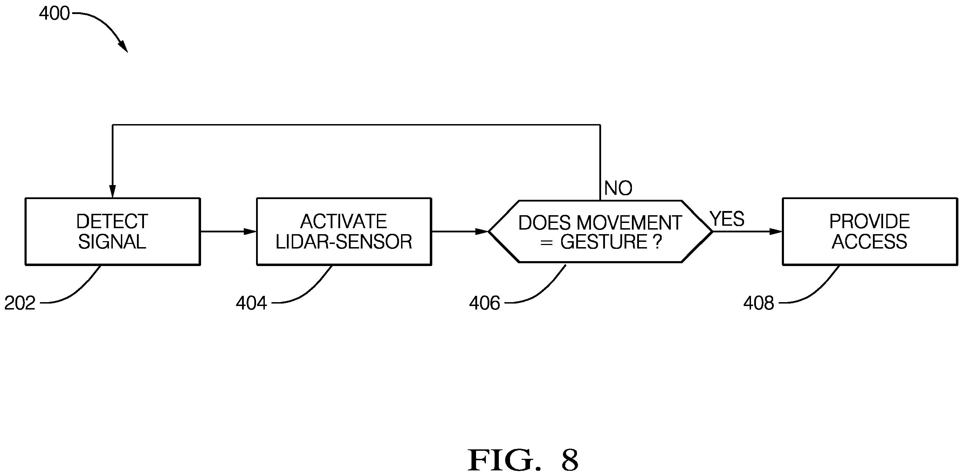

Fig. 8 illustrates another embodiment of a method 400 of hands-free access 136.

Step 402, DETECT SIGNAL, includes detecting, by a host-transceiver 114 in a host-vehicle 112, a signal 116 from a mobile-transceiver 118 within a distance-threshold 134.

Fig. 5 illustrates a non-limiting example of a hands-free access system 110, hereafter referred to as the system 110, installed in a host-vehicle 112. The system 110 includes a host-transceiver 114. The host-transceiver 114 is any of the known passive entry devices, typically used in automotive applications and typically referred to as Passive Entry (PE) or Passive Entry/Passive Start (PEPS) devices, such as the PEPS system available from Atmel Corporation of San Jose, California, U.S.A. The host-transceiver 114 detects the signal 116 from the mobile-transceiver 18 (e.g. a key fob, smart phone, etc.) that is paired to the host-transceiver 114 through the respective wireless communication protocols associated with the passive entry device, as will be understood by those skilled in the art. The passive entry device includes a plurality of antennae (not shown) installed on the host-vehicle 112 that receive the signal 116 from the mobile-transceiver 118. The mobile-transceiver 118 is typically detected by the host-transceiver 114 at a distance of at least two meters (2 m) from the host-vehicle 112 to enable a system-activation-time of about one second (1 s), as will be described in more detail below.

Step 404, ACTIVATE LIDAR-SENSOR, includes activating, by a controller 130, a lidar-sensor 120. The system 110 also includes the lidar-sensor 120 that detects movement 122 of one or more body parts 124 of a person 126 proximate to the host-vehicle 112. The lidar-sensor 120 is generally configured to detect the reflection of a lidar-signal 128 that may include data indicative of the detected target proximate to the host-vehicle 112. As used herein, the detected target is the one or more body parts 124 of the person 126 (or an extension of the one or more body parts 124, such as a package or a bag) that is detected by the lidar-sensor 120 and tracked by the controller 130, as will be described below.

By way of example and not limitation, the lidar-sensor 120 may be configured to output a continuous or periodic data stream that includes a variety of signal characteristics associated with each target detected. The signal characteristics may include or be indicative of, but are not limited to, the range to the target from the host-vehicle 12, the azimuth-angle to the target relative to a host-vehicle-longitudinal-axis (not shown), an elevation-angle to the target (not shown) an amplitude (not shown) of the lidar-signal 128 detected by the lidar-sensor 120, and a relative-velocity of closure (i.e. a range-rate, not shown) relative to the target.

The system 110 also includes the controller 130 in communication with the host-transceiver 114 and the lidar-sensor 120. The controller 130 may include a processor (not shown) such as a microprocessor or other control circuitry such as analog and/or digital control circuitry including an application specific integrated circuit (ASIC) for processing data as should be evident to those in the art. The controller 130 may include a memory 132, including non-volatile memory, such as electrically erasable programmable read-only memory (EEPROM) for storing one or more routines, thresholds, and captured data. The one or more routines may be executed by the processor to perform steps for determining if the detected movement 122 of the one or more body parts 124 are recognized based on signals received by the controller 130 from the lidar-sensor 120 as described herein.

The controller 130 may analyze the lidar-signal 128 to categorize the data from each detected target with respect to a list of previously detected targets having established tracks. As used herein, a track refers to one or more data sets that have been associated with a particular one of the detected targets. By way of example and not limitation, if the amplitude of the lidar-signal 128 is above a predetermined amplitude threshold, then the controller 130 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location (not shown) in a field-of-view of the lidar-sensor 120.

The controller 130 activates the lidar-sensor 120 in accordance with a determination that the mobile-transceiver 118 is within a distance-threshold 134 of the host-vehicle 112. That is, the controller 130 "wakes-up" the lidar-sensor 120, that may have been deactivated to conserve the host-vehicle 112 battery power, when the mobile-transceiver 118 is detected. The distance-threshold 134 of at least 2 m, as previously mentioned, would enable the system-activation-time of about 1 s, for the person 126 in possession of the mobile-transceiver 118 that is approaching the host-vehicle 112 at a typical walking-speed of 1.5 m/s. The distance-threshold 134 may extend to a maximum detectable range of the passive entry subsystem.

Step 406, DETERMINE MOVEMENT, includes determining, by the controller 130, that the movement 122 of the one or more body parts 124 corresponds to one or more predetermined gestures 138. The one or more predetermined gestures 138 include a start-and-stop sequence of movement 122 of at least a part of a human body, such as a hand, a foot, a leg, a knee, an elbow, a hip, a shoulder, a head, etc., and may also include the movement 122 of an extension of at least a part of the human body, such as a brief case held in the hand, a box held in both hands, or a baby stroller or shopping cart pushed by the person 126. The lidar-sensor 120 tracks the start-and-stop sequence of movement 122 and the controller 130 determines whether the start-and-stop sequence of movement 122 corresponds to (i.e. matches) the predetermined gesture 138 stored in the memory 132. The one or more predetermined gestures 138 stored in the memory 132 of the controller 130 may correspond to at least one unique host-vehicle 112 access-command 140. The access-command 140 defines the type of access 136 to the host-vehicle 112 as commanded by the person 126. For example, moving the hand toward the sky may be the command to unlock the door of the host-vehicle 112, while moving the hand toward the ground may be the command to lock the door. The lidar-sensor 120 may detect the one or more predetermined gestures 138 at the distance of greater than 5 cm from the host-vehicle 112 and up to the maximum range of the lidar-sensor 120, which may exceed 80 m.

The one or more predetermined gestures 138 may be user-configurable. That is, the user may determine their own unique one or more predetermined gestures 138 to allow a particular type of access 136 to the host-vehicle 112, and may store the unique one or more predetermined gestures 138 in the memory 132 of the controller 130. The user-configurable feature is beneficial because it enables the user to customize the access 136 to meet the user's own particular personal needs. For example, a disabled-person may not be capable gesturing in the same way as a non-disabled-person, and may be disadvantaged by an access system that uses a factory-installed-gesture. Similarly, an elderly-person that may not have the same sense of balance as a youthful-person may be disadvantaged by the access system that uses the factory-installed-gesture that requires balancing on one foot.

Step 408, PROVIDE ACCESS, includes providing, by the controller 130, access 136 to the host-vehicle 112. The controller 130 provides access 136 to the host-vehicle 112 in accordance with the determination that the movement 122 of the one or more body parts 124 corresponds to one or more predetermined gestures 138.

Fig. 6 illustrates the host-vehicle 112 equipped with the system 110 and the host-vehicle 112 includes a rear-end, a front-end, and two sides, at least one of the two sides including one or more doors. The person 126 is in possession of the mobile-transceiver 118 proximate to the rear-end of the host-vehicle 112. The system 110 further determines a location 142 of the mobile-transceiver 118 with respect to the host-vehicle 112 by determining the distances from the mobile-transceiver 118 to the plurality of antennae of the passive entry device, as will be understood by those in the art of passive entry devices. In the particular example illustrated in Fig. 6, the controller 130 further provides the person 126 access 136 to the trunk of the host-vehicle 112 in accordance with the determination that the lidar-sensor 120 detects one of the one or more predetermined gestures 138, which is illustrated as a vertical-movement of the hand.

Fig. 7 illustrates the host-vehicle 112 equipped with the system 110 and the person 126 is in possession of the mobile-transceiver 118 proximate to one of the two sides of the host-vehicle 112 (i.e. a left-side of the host vehicle). In the particular example illustrated in Fig. 7, the controller 130 further provides access 136 to the one or more doors of the host-vehicle 112 (i.e. the left-side door) in accordance with the determination that the lidar-sensor 120 detects one of the one or more predetermined gestures 138, which is illustrated as a horizontal-movement of the foot.

The user may configure the system 110 to allow access 136 to the host-vehicle 112 using the same predetermined gesture 138 for all access-commands 140 based only on the location 142 of the mobile-transceiver 118 relative to the host-vehicle 112. For example, the vertical-movement of the hand can be performed at the rear-end of the host-vehicle 112 to open the trunk, and can be performed at the side of the host-vehicle 112 to unlock the door. Alternatively, the user may configure the system 110 to allow access 136 to the host-vehicle 112 using a different predetermined gesture 138 for different access-commands 140 at any location 142 relative to the host-vehicle 112. For example, the vertical-movement of the hand can be performed at any location 142 to unlock a driver's-side door, while the horizontal-movement of the foot can be performed at any location 142 to open the trunk.

Additionally, the person 126 performing the predetermined gesture 138 need not be in possession of the mobile-transceiver 118 to gain access 136 as long as the mobile-transceiver 118 is detected within the distance-threshold 134 of the host-vehicle 112. That is, another-person (not shown) may perform the predetermined gesture 138 to gain access 136 when the mobile-transceiver 118 is detected within the distance-threshold 134 of the host-vehicle 112.

Accordingly, a hands-free access system 10 (the system 10), a controller 30 for the system 10, and a method of operating the system 200 are provided. The system 10 is beneficial because the system 10 enables hands-free access 36 to the host-vehicle 12 with improved ergonomics over other hands-free access systems.

While this invention has been described in terms of the preferred embodiments thereof, it is not intended to be so limited, but rather only to the extent set forth in the claims that follow.

## Claims

1. A hands-free access system (10), comprising:
a host-transceiver (14) in a host-vehicle (12), the host-transceiver (14) detecting a signal (16) from a mobile-transceiver (18);
a radar-sensor (20) or a lidar-sensor (120), the radar-sensor (20) or the lidar-sensor (120) detecting movement (22) of one or more body parts (24) of a person (26) proximate to the host-vehicle (12); and
a controller (30) in communication with the host-transceiver (14) and the radar-sensor (20) or the lidar-sensor (120), the controller (30) activating the radar-sensor (20) or the lidar-sensor (120) in accordance with a determination that the mobile-transceiver (18) is within a distance-threshold (34) of the host-vehicle (12), and the controller (30) providing access (36) to the host-vehicle (12) in accordance with a determination that the movement (22) of the one or more body parts (24) corresponds to one or more predetermined gestures (38).

2. The system (10) in accordance with claim 1, wherein each of the one or more predetermined gestures (38) correspond to at least one unique host-vehicle (12) access-command (40).

3. The system (10) according to any one of the claims 1 or 2, wherein the system (10) further determines a location (42) of the mobile-transceiver (18) with respect to the host-vehicle (12), the host-vehicle (12) comprising a front-end, a rear-end, and two sides, at least one of the two sides comprising one or more doors.

4. The system (10) in accordance with claim 3, wherein the location (42) is one of the two sides of the host-vehicle (12), and the controller (30) further provides access (36) to the one or more doors of the host-vehicle (12) in accordance with the determination that the radar-sensor (20) or the lidar-sensor (120) detects one of the one or more predetermined gestures (38).

5. The system (10) according to any one of the preceding claims, wherein the mobile-transceiver (18) is detected by the host-transceiver (14) at a distance of at least two meters from the host-vehicle (12).

6. The system (10) according to any one of the preceding claims, wherein the radar-sensor (20) or the lidar-sensor (120) detects the one or more predetermined gestures (38) at a distance of greater than five centimeters from the host-vehicle (12).

7. The system (10) according to any one of the preceding claims, wherein the one or more predetermined gestures (38) are user-configurable.

8. A method (200) of hands free access comprising:
detecting, by a host-transceiver (14) in a host-vehicle (12), a signal (16) from a mobile-transceiver (18) within a distance-threshold (34);
in accordance with a determination that the mobile-transceiver (18) is within the distance-threshold (34), activating, by a controller (30), a radar-sensor (20) or a lidar-sensor (120), the radar-sensor (20) or the lidar-sensor (120) detecting movement (22) of one or more body parts (24) of a person (26); and
in accordance with a determination, by the controller (30), that the movement (22) of the one or more body parts (24) corresponds to one or more predetermined gestures (38), providing access (36) to the host-vehicle (12).

9. The method (200) in accordance with claim 8, wherein each of the one or more predetermined gestures (38) correspond to at least one unique host-vehicle (12) access-command (40).

10. The method (200) according to any one of the claims 8 or 9, wherein the host-transceiver (14) further determines a location (42) of the mobile-transceiver (18) with respect to the host-vehicle (12), the host-vehicle (12) comprising a front-end, a rear-end, and two sides, at least one of the two sides comprising one or more doors.

11. The method (200) in accordance with claim 10, wherein the location (42) is one of the two sides of the host-vehicle (12), and the controller (30) further provides access (36) to the one or more doors of the host-vehicle (12) in accordance with the determination that the radar-sensor (20) or the lidar-sensor (120) detects one of the one or more predetermined gestures (38).

12. The method (200) according to any one of the claims 8 to 11, wherein the mobile-transceiver (18) is detected by the host-transceiver (14) at a distance of at least two meters from the host-vehicle (12).

13. The method (200) according to any one of the claims 8 to 12, wherein the radar-sensor (20) or the lidar-sensor (120) detects the one or more predetermined gestures (38) at a distance of greater than five centimeters from the host-vehicle (12).

14. The method (200) according to any one of the claims 8 to 13, wherein the one or more predetermined gestures (38) includes a movement (22) of at least a part of a human body.

15. The method (200) according to any one of the claims 8 to 14, wherein the one or more predetermined gestures (38) are user-configurable.
